# EUROPEAN PATENT APPLICATION

(11) **EP 1 083 495 A1**
(43) Date of publication of application: **14.03.2001**
(21) Application number: 00202751.4
(22) Date of filing: 03.08.2000
(51) Int. Cl.: G06F 17/30

(54) **Data-processing system.**

(30) Priority: 09.09.1999 NL 1013005
(71) Applicant: Koninklijke KPN N.V., 9726 AE Groningen (NL)
(72) Inventor: Caarls, Jacobus Johannes, 7609 PA Almelo (NL)
(74) Representative: Klein, Bart

(57) **Abstract**

Data-processing system, comprising means for inputting, storing, processing and outputting data entities. Uncoupling between the several life phases of data is achieved by the standard addition of at least one time label to each occurrence of a data entity in the data-processing system. An uncoupling, therefore, of the moment of storage of data, the period (or periods) within which data is valid (or possibly invalid, as the case may be) and the moment of letting this data lapse. Here, "valid" is understood to mean: valid for carrying out, by the system, operations (calculations, outputting overviews etc.) on the (occurrences of the) data entities.

## Description

### BACKGROUND OF THE INVENTION

The invention relates to a data-processing system comprising means for entering occurrences of data entities. In addition, the invention comprises a method for data processing comprising the entry of occurrences of data entities.

Such a system and such a method are generally known. As a rule, all this is implemented by way of a computer system comprising hardware, control software and application software, in this case referred to as data-base software. The hardware is often formed by several PCs or terminals which are connected to a server by way of a network. The data base proper generally is only present in the server, even if there are other options. Within smaller organisations, standalone systems are also being applied.

The field of file organisation takes an ever more important place within automation. Where, in the initial period of automation, the sequential and direct approach of data seemed to suffice, nowadays for a small, application it is often required to set up a data base which automatically maintains the relations between data. Gradually, therefore, the differences between physical storage, logical storage and the actual use of data are becoming ever greater.

So far, however, the time element has not come within the scope of generic file organisation. It is true that various specific applications have solved thin concept within said application, as it takes place, e.g., within personnel administration; however, such is done only in part there, i.e., only in those places in software where ― as say be foreseen during the creation of the software ― such is necessary or desirable.

### SUMMARY OF THE INVENTION

The invention may be described as the standard addition, in the data-processing system, of at least one time label to each "occurrence" of a data entity. "Occurrence" may be defined as a "version" of the content of an entity, e.g., the value "39.98" in the data entity "Price of the article". If, at a specific point in time, the price becomes 42.25 (e.g., in euros) and said new price is entered into the system in the field "Price of the article" for a specific article, the value of 42.25 is a new occurrence of the entity "Price of the article".

Apart from occurrences of data entities (data occurrences), there stay also be various occurrences of relational or processing entities (processing occurrences). In a spreadsheet program, e.g., some of the cells of the spreadsheet matrix stay be filled with (occurrences of) data entities, whereas other cells stay be filled with (occurrences of) relational or processing entities, into which it has been entered what data entities are related to one another, and/or in which way they are processed with one another. The present invention is not limited to the addition of time labels to data occurrences, but may also comprise the addition of time labels to processing or relational occurrences. For the time being, however, for simplicity's and clarity's sake "occurrence" below is understood to refer to "data occurrence". Later on, the present invention is also sometimes indicated by the (meanwhile registered) name of "Dynamic Data Principle" (DDP).

The system according to the invention results in an uncoupling between the several life phases of data and/or their mutual (processing) relations. An uncoupling, therefore, of the moment of storage of data (data and/or processing data), the period (or periods) of time within which data is valid (or possibly invalid) and the point in time of letting said data lapse.

The time label attributed, in accordance with the present invention, to each occurrence (version), preferably comprises one or more periods in time at which the occurrence is valid ― or, on the contrary, invalid. Each of said periods is formed by a moment in time at which the occurrence acquires its validity and a moment in time at which the occurrence loses its validity. "Valid" in this context is understood to means valid for having operations (calculations, outputting overviews etc.) carried out by the system.

The consequences of the invention are great, as will be indicated below.

### EXEMPLARY EMBODIMENTS

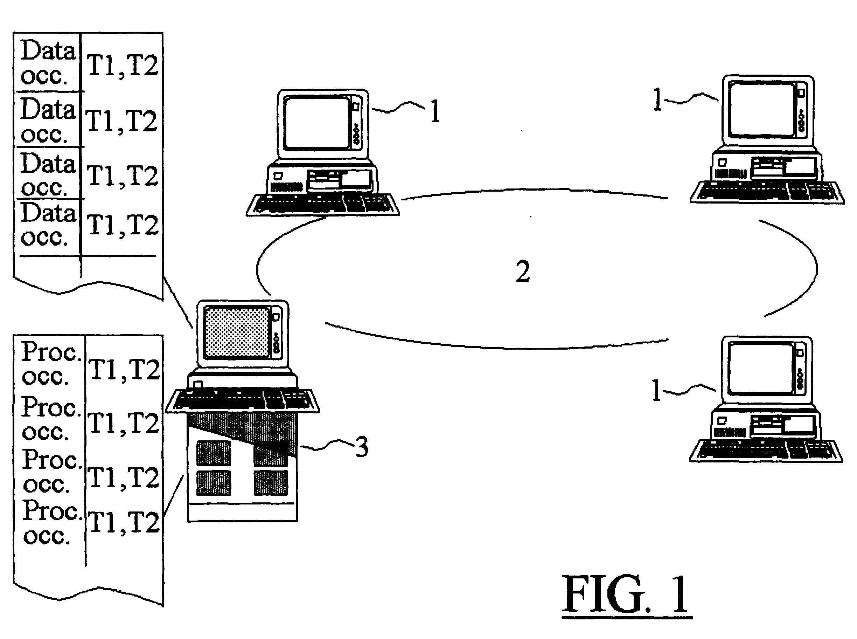

FIG. 1 shows a data-processing system formed by several terminals 1, connected by way of a company network 2 to a server 3. By way of the terminals 1, data and operation-relation occurrences may be entered into the data base installed in the server 3. The data and processing relations form a technical/economic model of the internal process within the company where commercial goods are being produced or processed. Such models of course may also be manufactured for companies or organisations offering services.

FIG. 1 schematically shows several data occurrences ("Data occ."), entered by way of terminals 1, with a "time label" indicating a validity period (T1 to T2) being added to each occurrence in conformity with the invention. Likewise, several occurrences are shown ("Proc. occ.") relating to mutual relations between the data, to which a "time label" is added as well. Below, worked-out examples are given for the use of data occurrences and processing/relational occurrences and the options of using time labels.

### Validity period

Under normal circumstances, an occurrence is stored only once in a data set. By adding the validity period, it is possible that an occurrence figures more than once within a data set and is in fact formed by different occurrences having different time labels. The following example illustrates this:

| **Art. No.** | **Description** | **Unit** | **Price** |
|---|---|---|---|
| A 300 | Tin opener | Apiece | 53.25 |

| **Art. No.** | **Description** | **Unit** | **Price** |
|---|---|---|---|
| | The period over which said occurrence is valid, is not referred to. This implies that the validity period starts at the point in time of addition of the data set, and is terminated when it is removed therefrom. | | |

| **Art. No.** | **Valid from ...** | **to ... inclusive** | **Description** | **Unit** | **Price** |
|---|---|---|---|---|---|
| A 300 | 05-02-1997 | 99-99-9999 | Tin opener | Apiece | 53.25 |
| A 300 | 01-11-1996 | 04-02-1997 | Tin opener | Apiece | 52.98 |
| A 300 | 01-01-1996 | 31-10-1996 | Tin opener | Apiece | 50.00 |
| | The Dynamic Data Principle requires a start and an end period in which the occurrence is valid. | | | | |

The above tables demonstrate the fundamental difference between occurrences in a state-of-the-art system and those in a system according to the invention.

Under normal circumstances, mutations to a data set may be subdivided into two groups, namely:
- mutations requiring the creation of a new occurrence. Such is the case for, e.g., a new article;
- mutations modifying an existing occurrence. An example of such a modification is a price mutation of an article.
In the event of the Dynamic Data Principle (DDP), however, the latter group should be subdivided once again into two subgroups, namely:
- substantial modifications in an existing occurrence, in such a manner that creation of a new version of said occurrence ― in other words, a new occurrence having its own time label ― is required. A price mutation is an example hereof;
- modifications adjusting an existing occurrence to a subordinate data cell. A small correction of a spelling error in the description of an article, e.g., might be considered included in this group.

### Creation of a new occurrence

Apart from the key and the normal attributes, an occurrence at the Dynamic Data Principle (DDP) should also contain the period over which the occurrence is valid.

The start date of the validity may be obtained by explicitly mentioning the date. Such occurs in those cases where the occurrence is not permitted to be immediately valid, or where the occurrence should be valid for some time already. Particularly not directly declaring an occurrence valid enables the inclusion in advance of occurrences in a data set. Thus, a new cost centre may already be included in the set of cost centres, without it being involved in the current processing.

### Use of the computer date

Whenever this date is taken to be the default date, the effect for the occurrence is equal to the method without Dynamic Data Principle (DDP), i.e., the validity period starts at the point in time on which the occurrence is created.

The end date of the validity may be stated as a specific date. This implies that, after the end date has been, reached, the occurrence admittedly continues to be present in the data set, but is no longer involved in processing.

A specific value, indicated in the examples as "99-99-99", indicates that an end date has not yet been determined. Due to this, the occurrence continues to be valid until further notice. The notation "99-99-99" as the start date may indicate that the occurrence is not yet in force and therefore is not yet involved in processing or outputting.

### Creation of a new version

Basically, etch mutation of an occurrence provides for the creation of a new version of said occurrence. At the creation of a new version, care must of course be taken that only one version can be valid at each point in time. This implies that the version valid up to that point must be provided with a sound and, as a rule, contiguous end date. The following exemplary table shows said process.

| **Cost centre** | **Valid from ...** | **to ... inclusive** | **Description** | **Hourly rate** |
|---|---|---|---|---|
| K 512 | 11-10-1996 | 99-99-9999 | Sandpapering | 52.32 |
| K 512 | 06-06-1996 | 10-10-1996 | Sandpapering | 52.12 |

| **mutation:** | | | | |
|---|---|---|---|---|
| K 512 | 01-01-1997 | 99-99-9999 | Sandpapering | 52.40 |

| **result:** | | | | |
|---|---|---|---|---|
| K 512 | 01-01-1997 | 99-99-9999 | Sandpapering | 52.40 |
| K 512 | 11-10-1996 | 31-12-1996 | Sandpapering | 52.32 |
| K 512 | 06-06-1996 | 10-10-1996 | Sandpapering | 52.12 |

### Modifying a version

Subordinate modifications of attributes do not require the creation of a new version. The condition here, however, is that the modification must be valid with retroactive effect. The latter is the case, e.g., when, spelling errors are to be corrected.

### Removal of data

The removal of data from sets in the event of the Dynamic Data Principle (DDP) may be broken down into two moments, namely:
- terminating the validity period. By simply modifying the end date of the validity, the occurrence may be set to inactive. This also implies that said date may then be earlier or later than the point in time of introduction of the end date.

### Removal of all, or a portion of, the versions of an occurrence

One of the major advantages of the Dynamic Data Principle (DDP) is the fact that terminating an occurrence, and the actual removal of occurrences, may take place at two different points in time. If, e.g., a year ago a version of an occurrence was provided with an end date, it may be decided to actually remove said version from the sat.

### Approaching data

Under normal circumstances, one key suffices to retrieve a specific occurrence from a data set. In the event of applying the Dynamic Data Principle (DDP), however, such is no longer sufficient. It is now also required to give a date for the selection of the correct (valid) version of an occurrence.

When the date is given, three cases may occur:
- the current point in time is taken as the I/O date. This means that the version which is valid at this point in time of the occurrence is read in. This is the customary way of approach;
- a moment in the past is taken as the I/O date. Predating towards the past shall be required, e.g., to manufacture an end-of-year inventory. But even if a new computer program is "let loose" on old data, comparable data will be obtained;
- a moment in the future is taken as the I/O date. In the event of a specific operation, if all data has already been entered in advance, it will, be possible, without additional provisions having to be affected, to produce overviews utilising said new data.
Below, there follows an example of a data set of cost centres.

| **Cost centre No.** | **Valid from ...** | **to ... inclusive** | **Description** | **Hourly rate** |
|---|---|---|---|---|
| K 510 | 01-01-1997 | 99-99-9999 | Assembly | 48.99 |
| K 510 | 06-06-1996 | 31-12-1996 | Assembly | 48.50 |
| K 512 | 01-01-1997 | 99-99-9999 | Sandpapering | 52.23 |
| K 512 | 11-11-1996 | 31-12-1996 | Sandpapering | 51.71 |
| K 512 | 06-06-1996 | 10-11-1996 | Sandpapering | 52.12 |
| K 515 | 01-01-1997 | 99-99-9999 | Compressing | 60.94 |
| K 515 | 06-06-1996 | 31-12-1996 | Compressing | 60.34 |
| K 517 | 02-02-1997 | 99-99-9999 | Welding | 49.82 |
| K 517 | 13-11-1996 | 01-02-1997 | Welding | 50.06 |
| K 517 | 06-06-1996 | 12-11-1996 | Welding | 51.11 |
| K 518 | 06-06-1996 | 99-99-9999 | Sawing | 51.45 |
| K 529 | 01-01-1997 | 99-99-9999 | Checking | 46.56 |
| K 529 | 06-06-1996 | 31-12-1996 | Checking | 46.10 |
| K 530 | 01-01-1997 | 99-99-9999 | Packaging | 48.31 |
| K 530 | 06-06-1996 | 31-12-1996 | Packaging | 47.83 |

Overview dated 5th March, 1997 having as its I/O date 20th December, 1996:

| **Cost centre No.** | **Description** | **Hourly rate** |
|---|---|---|
| K 510 | Assembly | 48.50 |
| K 512 | Sandpapering | 51.71 |
| K 515 | Compressing | 60.34 |
| K 517 | Welding | 50.06 |
| K 518 | Sawing | 51.45 |
| K 529 | Checking | 46.10 |
| K 530 | Packaging | 47.83 |

Overview dated 5th March, 1997 having as its I/O date 4th February, 1997:

| **Cost centre No.** | **Description** | **Hourly rate** |
|---|---|---|
| K 510 | Assembly | 48.99 |
| K 512 | Sandpapering | 52.23 |
| K 515 | Compressing | 60.94 |
| K 517 | Welding | 49.82 |
| K 518 | Sawing | 51.45 |
| K 529 | Checking | 46.56 |
| K 530 | Packaging | 48.31 |

### Recording moment

In practise, many decisions regarding data storage prove to be taken on the basis of the point in time at which a specific data cell has been recorded or mutated. By recording the moment of registry, decisions, such as removing versions of occurrences, may be taken independently from the validity period.

In normal use, said date is of subordinate importance, but for processes of checking data sets as a whole, the role of said date may be of immediate importance.

### View to the future

Scientific programs regularly calculate extrapolations of currant data as trends for the future. It is difficult to include said calculations in the normal processing methods. As a rule, they have an exceptional position from the very creation of the process.

Using the Dynamic Data Principle (DDP), however, it is relatively simple to bring this future or expected data within the same data set as the data relating to the current situation.

Including future expectations in a data set is shown by the following example, in which the turnover (shown within lines) expected for the months of April and May has been calculated.

| **Art. No.** | **Valid from ...** | **to ... inclusive** | **Description** | **Unit** | **Turnover** |
|---|---|---|---|---|---|
| A 010 | 01-05-1997 | 31-05-1997 | Tandem | PR[?] | 4500 |
| A 010 | 01-04-1997 | 30-04-1997 | Tandem | PR | 4000 |
| A 010 | 01-03-1997 | 31-03-1997 | Tandem | PR | 3911 |
| A 010 | 01-02-1997 | 28-02-1997 | Tandem | PR | 3461 |
| A 010 | 01-01-1997 | 31-01-1991 | Tandem | PR | 4863 |

As soon as real data is known over April or May, this must of course be substituted for the expectations.

Finally, another example follows below, which additionally illustrates the use of time lables in relational occurrences.

For completeness' sake, an example still follows of the operation of the Dynamic Data Principle (DDP). What is striking in the example is that the departments may introduce information into the system entirely independently from one another. Procedures to convert, e.g., paths, are no longer necessary.

The data structure is as follows: 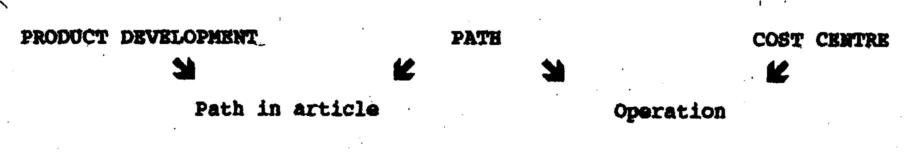 An example of occurrences having the above structure is given below.

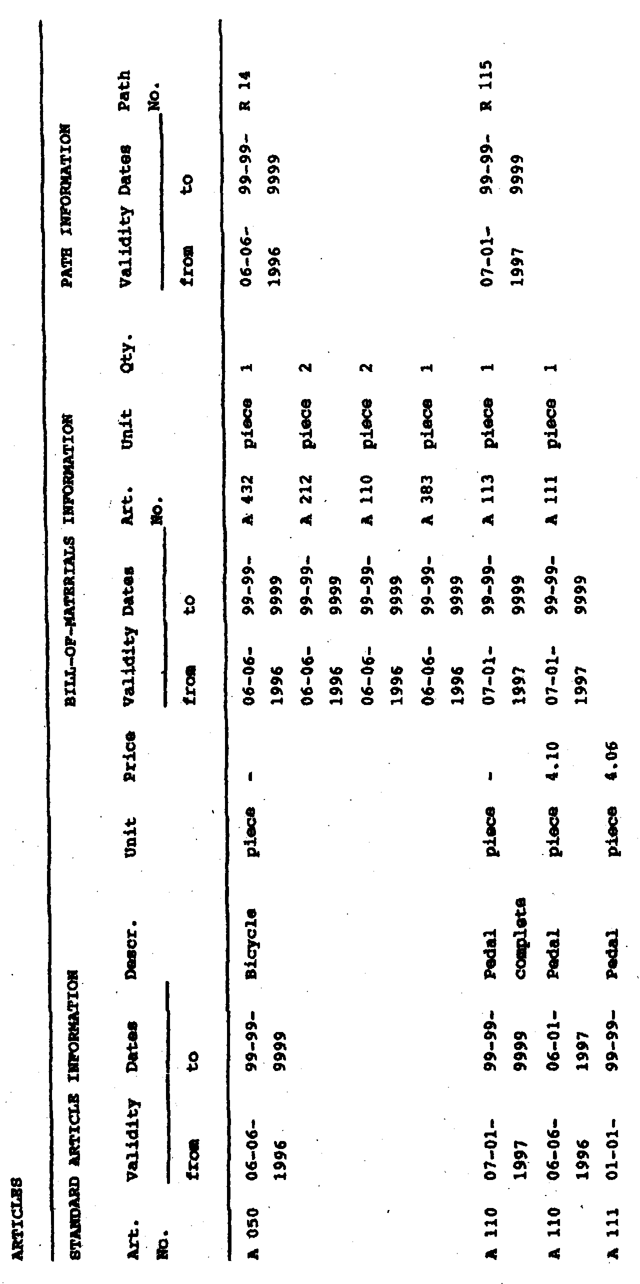

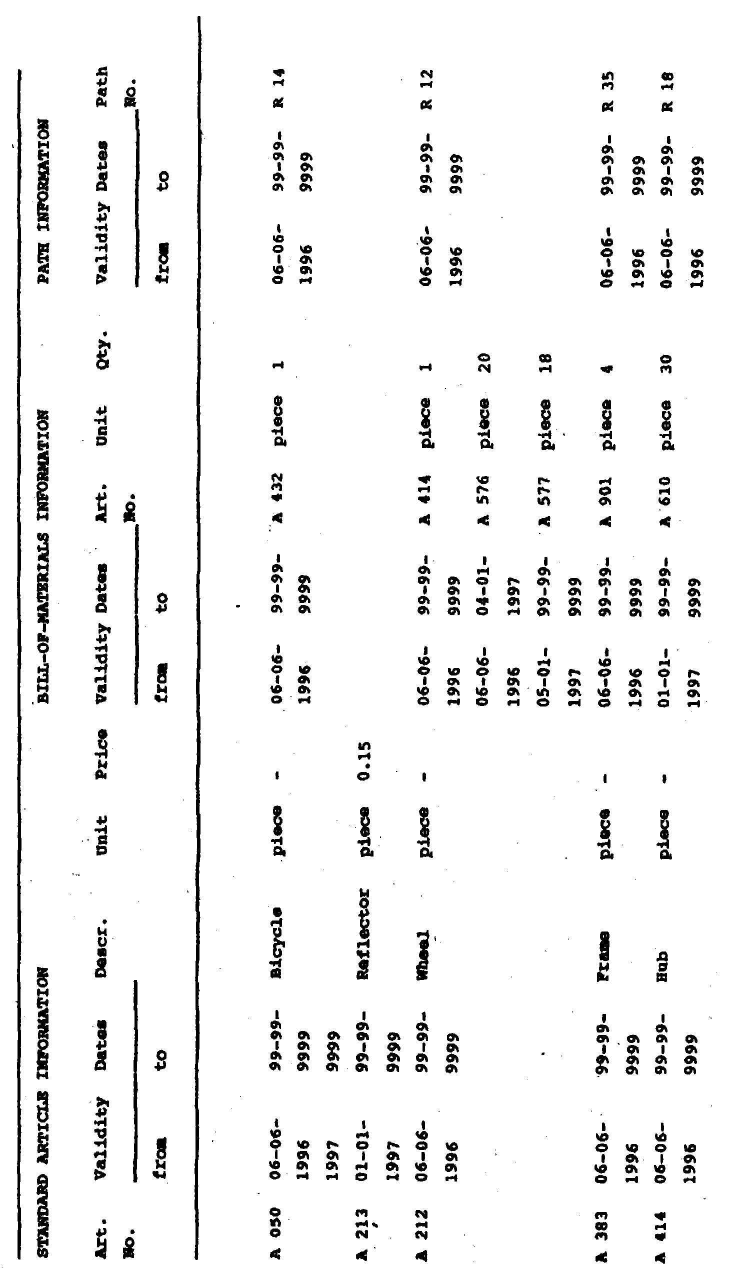

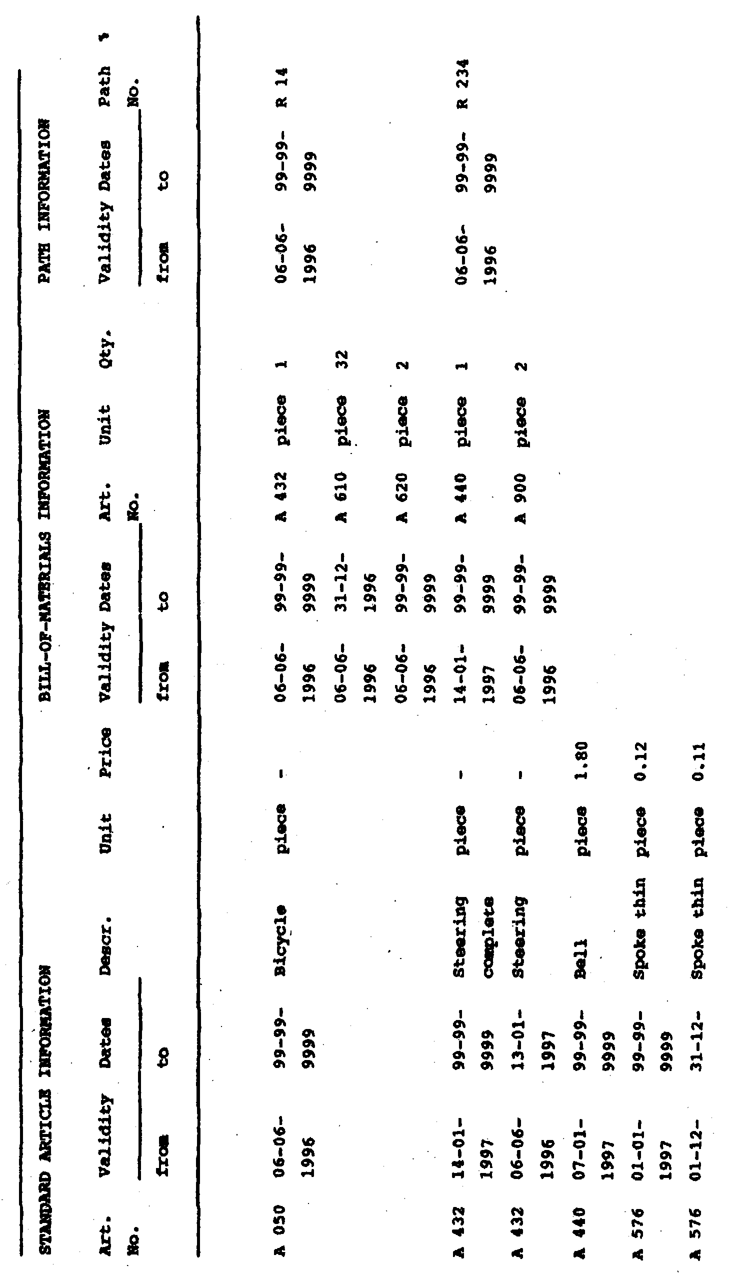

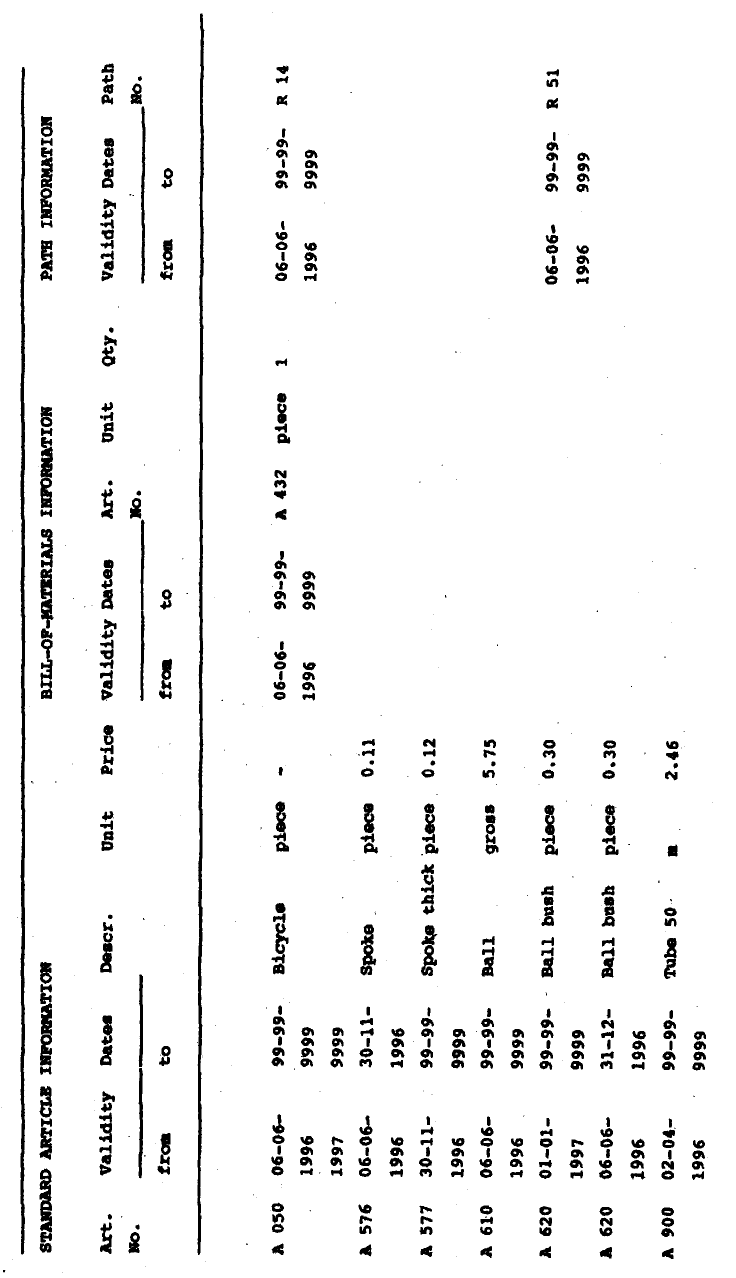

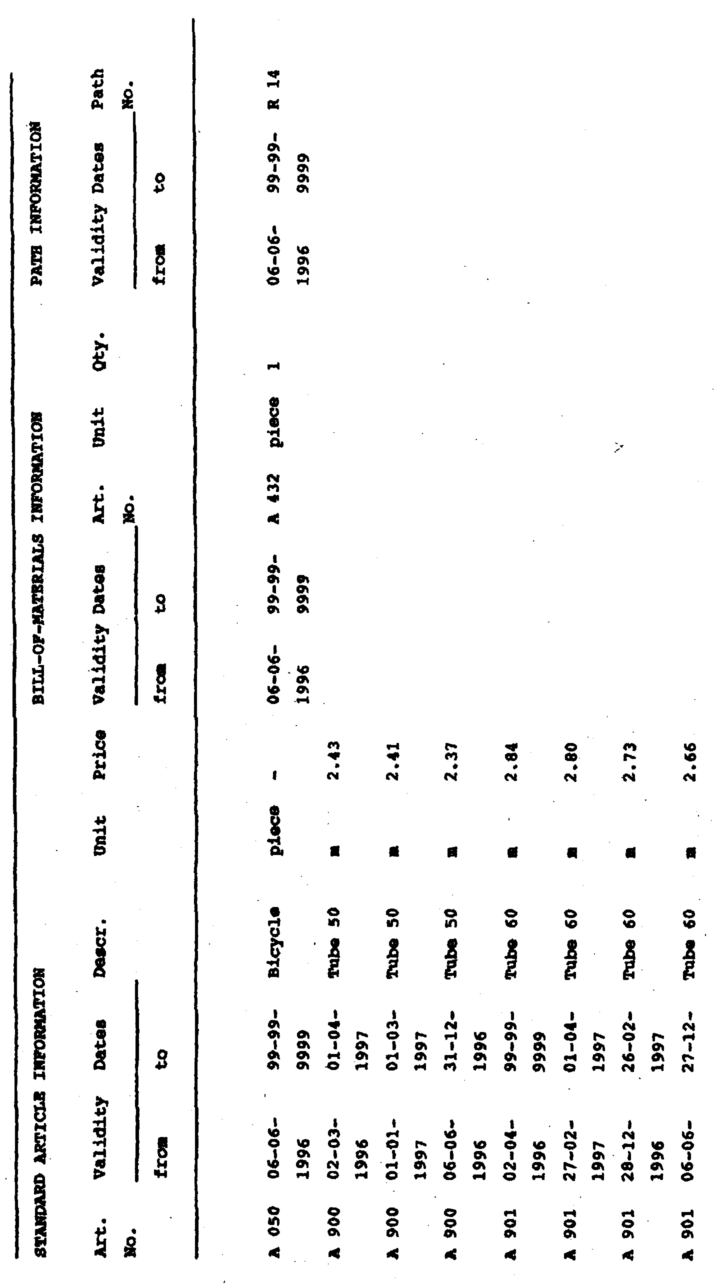

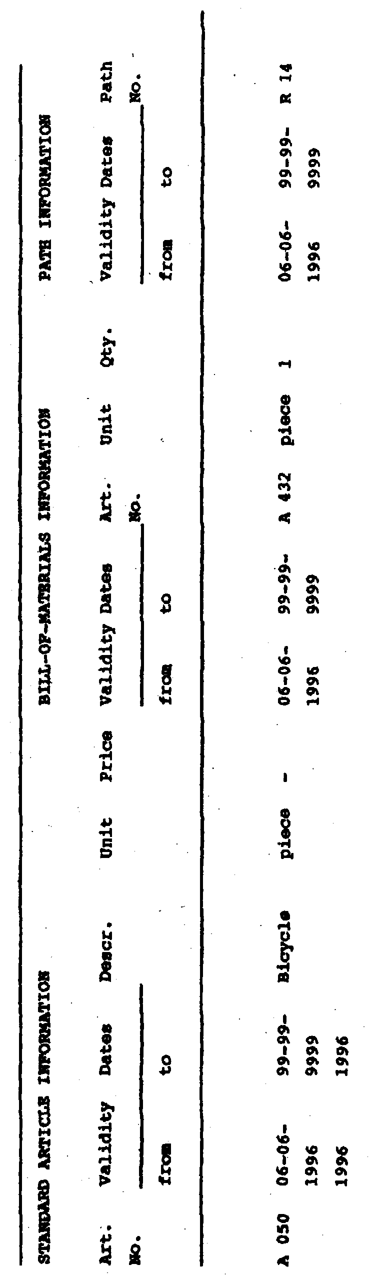

| PATHS | | | | | |
|---|---|---|---|---|---|
| **Path No.** | **Valid from ...** | **to ... inclusive** | **Description** | **Time** | **Cost centre No.** |
| R 12 | 04-06-1996 | 99-99-9999 | Hub/spokes assembly | 0.10 | K 510 |
| | 06-06-1996 | 99-99-9999 | Check | 0.02 | K 529 |
| R 14 | 06-06-1996 | 99-99-9999 | Steering/frame assembly | 0.05 | K 510 |
| | 06-06-1996 | 99-99-9999 | Wheels assembly | 0.08 | K 510 |
| | 06-06-1996 | 99-99-9999 | Pedals assembly | 0.07 | K 510 |
| | 06-06-1996 | 99-99-9999 | Check | 0.18 | K 529 |
| | 02-03-1997 | 99-99-9999 | Packaging | 0.12 | K 530 |
| R 18 | 01-01-1997 | 99-99-9999 | Hub assembly | 0.09 | K 510 |
| | 06-06-1996 | 31-12-1996 | Hub assembly | 0.10 | K 510 |
| | 06-06-1996 | 99-99-9999 | Check | 0.01 | K 529 |
| R 35 | 06-06-1996 | 99-99-9999 | Sawing tubes | 0.07 | K 518 |
| | 06-06-1996 | 99-99-9999 | Welding tubes | 0.18 | K 517 |
| | 06-06-1996 | 99-99-9999 | Check | 0.08 | K 529 |
| R 51 | 01-01-1997 | 99-99-9999 | Bush compression | 0.02 | K 515 |
| R 115 | 07-01-1997 | 99-99-9999 | Reflector assembly | 0.01 | K 510 |
| R 234 | 06-06-1996 | 99-99-9999 | Saving tubes | 0.04 | K 518 |
| | 06-06-1996 | 99-99-9999 | Welding tubes | 0.41 | K 517 |
| | 06-06-1996 | 99-99-9999 | Sand-papering | 0.09 | K 512 |
| | 06-06-1996 | 99-99-9999 | Check | 0.06 | K 529 |
| | 07-01-1997 | 99-99-9999 | Bell assembly | 0.04 | K 510 |

| **COST CENTRES** | | | | |
|---|---|---|---|---|
| **Cost centre No.** | **Valid from ...** | **to ... inclusive** | **Description** | **Hourly rate** |
| K 510 | 01-01-1997 | 99-99-9999 | Assembly | 48.99 |
| K 510 | 06-06-1996 | 31-12-1996 | Assembly | 48.50 |
| K 512 | 01-01-1997 | 03-02-1997 | Sandpapering | 52.23 |
| K 512 | 11-11-1996 | 31-12-1996 | Sandpapering | 51.71 |
| K 512 | 06-06-1996 | 10-11-1996 | Sandpapering | 52.12 |
| K 515 | 01-01-1997 | 99-99-9999 | Compression | 60.94 |
| K 515 | 06-06-1996 | 31-12-1996 | Compression | 60.34 |
| K 517 | 02-02-1997 | 99-99-9999 | Welding | 49.82 |
| K 517 | 13-11-1996 | 01-02-1997 | Welding | 50.06 |
| K 517 | 06-06-1996 | 12-11-1996 | Welding | 51.11 |
| K 518 | 06-06-1996 | 99-99-9999 | Sawing | 51.45 |
| K 529 | 01-01-1997 | 99-99-9999 | Check | 46.56 |
| K 529 | 06-06-1996 | 31-12-1996 | Check | 46.10 |
| K 530 | 01-01-1997 | 99-99-9999 | Packaging | 48.31 |
| K 530 | 06-06-1996 | 31-12-1996 | Packaging | 47.83 |

Below, the cost-price structure of Article A 212 is considered at two different moments in time, namely as per 10th December, 1996 and as per 10th January, 1997. In this example, it is indicated that, on the basis of different selection dates, different data occurrences are selected, but also different relational occurrences.

The cost-price structure of Article A 212 with the I/O date of 10th December, 1996 is:

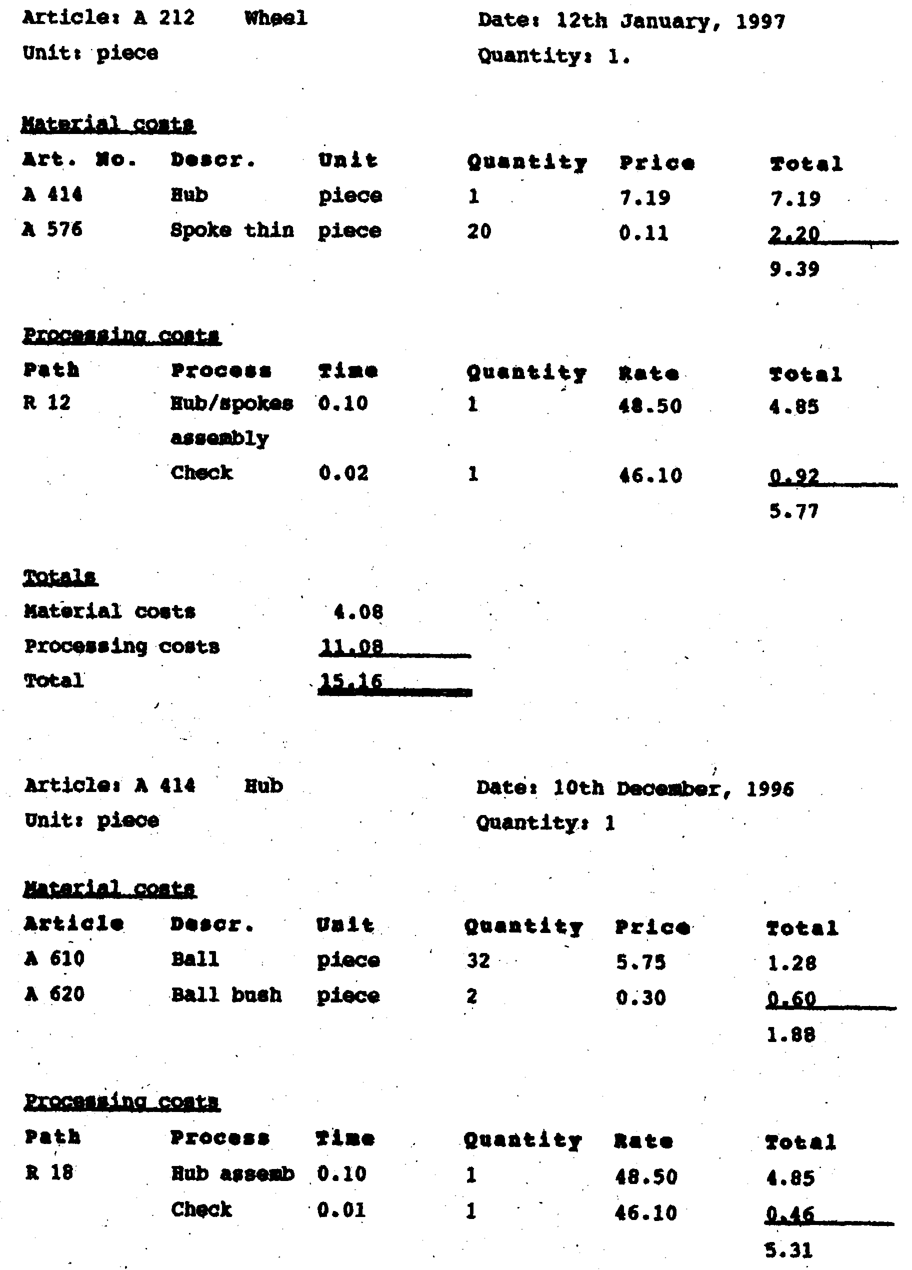

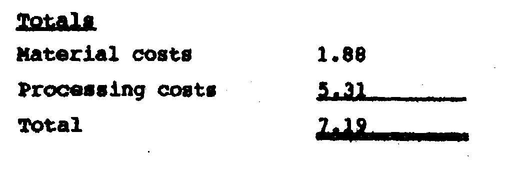

The cost-price structure of the seas Article A 212 with the I/O date of 12th January, 1997 is:

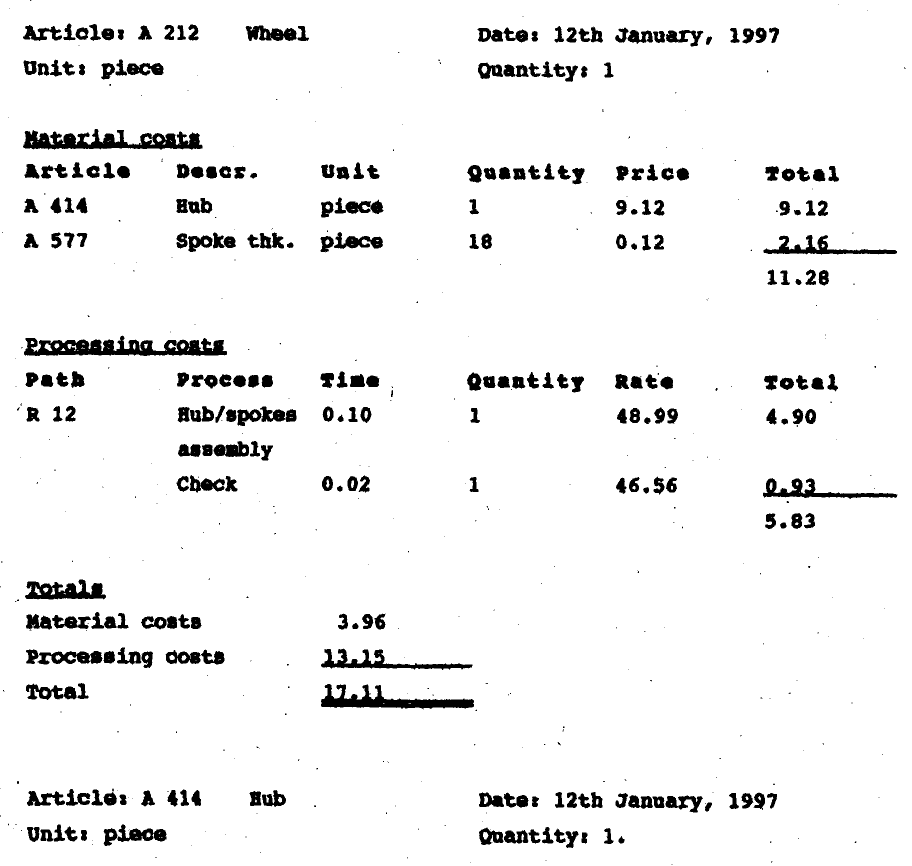

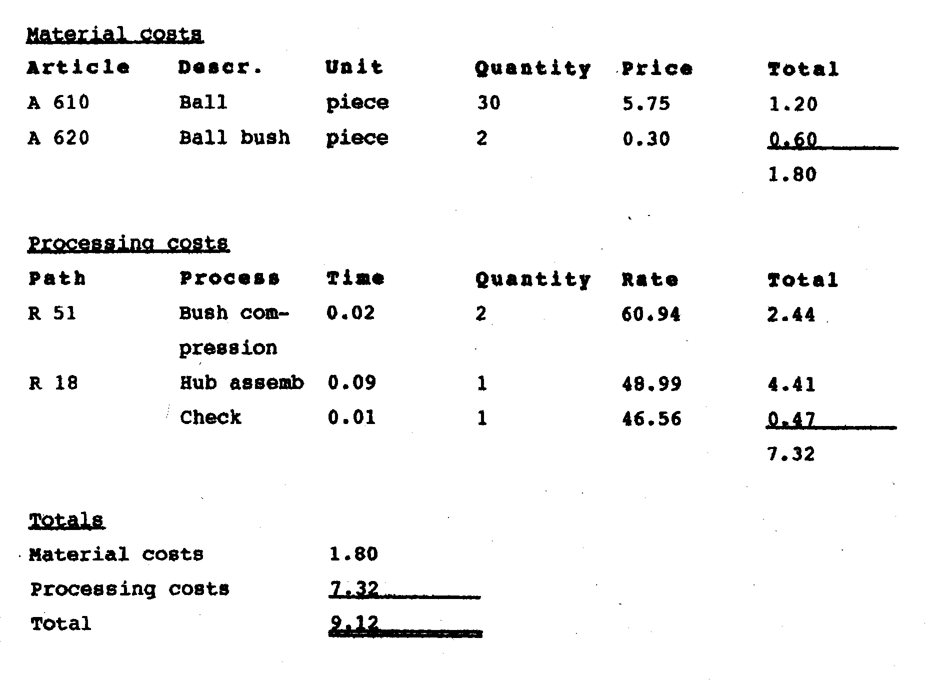

## Claims

1. Data-processing system, comprising means for inputting occurrences of data entities, hereinafter to be referred to as data occurrences, characterised by means for adding a time label to each of said data occurrences.

2. Data-processing system according to claim 1, further comprising means for inputting occurrences of processing entities, hereinafter to be referred to as processing occurrences, characterized by means for adding a time label to each of said processing occurrences.

3. Data-processing system according to claim 1 or 2, characterised in that said time label comprises one or more validity periods wherein the labelled occurrence is valid for processing or output.

4. Data-processing system according to claim 1 or 2, characterised in that the time label comprises one or more invalidity periods wherein the labelled occurrence is invalid for processing or output.

5. Data-processing system according to claim 1 or 2, characterised in that said time label comprises the input point in time of the new occurrence.

6. Method for data processing, comprising the input of occurrences of data entities, hereinafter to be referred to as data occurrences, characterised by the addition of a time label to each of said data occurrences.

7. Method according to claim 6, further comprising the input of occurrences of processing entities, hereinafter to be referred to as processing occurrences, characterised by the addition of a time label to each of said processing occurrences.

8. Method according to claim 6 or 7, characterised in that said time label comprises one or more validity periods wherein the labelled occurrence is valid for processing or output.

9. Method according to claim 6 or 7, characterised in that the time label comprises one or more invalidity periods wherein the labelled occurrence is invalid for processing or output.

10. Method according to claim 6 or 7, characterised in that said time label comprises the input point in time of the new occurrence.
